# EUROPEAN PATENT APPLICATION

(11) **EP 0 826 905 A2**
(43) Date of publication of application: **04.03.1998**
(21) Application number: 97112107.4
(22) Date of filing: 15.07.1997
(51) Int. Cl.: F16H 7/12

(54) **Belt tensioner**

(30) Priority: 29.08.1996 JP 228253/96; 31.10.1996 JP 290041/96
(71) Applicant: KOYO SEIKO CO., LTD., Chuo-ku Osaka 542 (JP)
(72) Inventor: Tanaka, Yasuhito, c/o Koyo Seiko Co., Ltd., Chuo-ku, Osaka 542 (JP)
(74) Representative: TER MEER STEINMEISTER & PARTNER GbR

(57) **Abstract**

A belt tensioner (A) arranged so that a turnable tension pulley (1) is allowed to oscillate at a fulcrum (2) of a position eccentric from the center of rotation thereof, wherein tension control means (3) for oscillating the tension pulley (1) so as to keep tension of a belt (80) constant and damper means (4) for damping vibrations and shocks transmitted from the belt (80) are provided separately at the side of the tension pulley. The tension control means (3) and the damper means (4) may be disposed so that they fit within the overall size of the tension pulley (1) on the side of the tension pulley (1) by disposing them side by side so as to adjoin on the same plane.

## Description

### BACKGROUND OF THE INVENTION

### Field of the Invention:

The present invention relates to a belt tensioner for controlling tension of a belt such as a timing belt and an accessory driving belt provided in an automobile engine and more particularly to a belt tensioner in which a turnable tension pulley is allowed to oscillate at a fulcrum of a position eccentric from a center of rotation thereof and which has functions of oscillating the tension pulley so as to keep the tension of the belt constant and of damping vibrations and shocks transmitted from the belt.

### Description of Related Art:

There is a case in general when tension of a belt changes due to changes of center-to-center distance between pulleys caused by a thermal eXansion of an automobile engine and to fluctuation of torque. Then, a belt tensioner has been devised in order to prevent such a change of tension of a belt and to keep it constant. As one example of the prior art belt tensioner, there is one as disclosed in Japanese Patent Publication No. Hei. 5-2852.

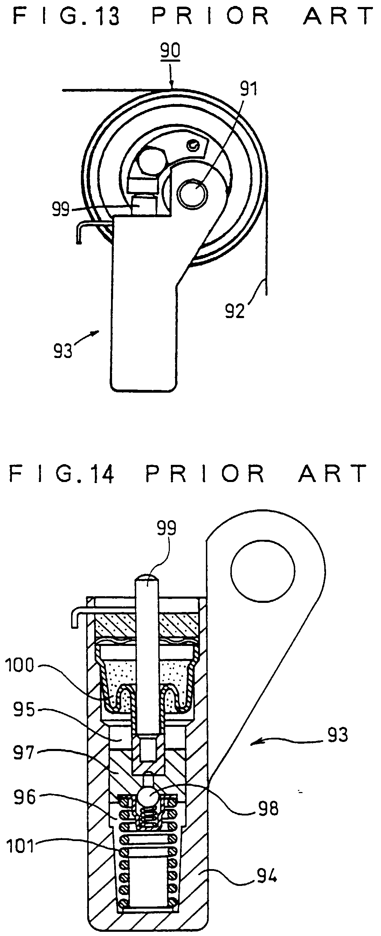

As shown in FIG. 13, this belt tensioner is constructed such that a turnable tension pulley 90 is allowed to oscillate at a fulcrum of a position 91 eccentric from a center of rotation thereof. It is provided with a direct-acting actuator 93 having a function of not only oscillating the tension pulley 90 so as to keep the tension of the belt 92 constant but also of damping vibrations and shocks transmitted from the belt 92.

As shown in FIG. 14, this direct-acting actuator 93 is arranged such that a cylindrical coil spring 101 for controlling the tension is added to a conventional oil damper mechanism comprising a case 94, i.e. a cylinder, a piston 97 which is slidably stored within the case 94 and which creates two fluid chambers 95 and 96, a check valve 98 which is provided in the piston 97 to control move of operating oil between the fluid chambers 95 and 96, a push rod 99 connected to the piston 97 and a diaphragm seal 100 for preventing the operating oil from leaking from the case 94.

By the way, while the direct-acting actuator 93 comprising the means for operating the tension pulley 90 so as to oscillate to keep the tension of the belt 92 constant and the means for damping vibrations and shocks transmitted from the belt 92 is used in the prior art belt tensioner described above, the overall size of the belt tensioner is large because the direct-acting actuator 93 is formed in a relatively long shape as shown in FIG. 14 and does not fit within the dimension of the outer diameter of the tension pulley 90. Due to that, there has been a problem that the belt tensioner may interfere with other members provided around an object to which the belt tensioner is installed (hereinafter referred to as an object of installation), thus becoming impossible to be installed, or that a distance between the other member becomes too narrow that it becomes hard to maintain when an installation space is limited in connection with an arrangement and layout of the other members on the object of installation of the belt tensioner.

It is noted that although the length of the direct-acting actuator 93 may be shortened by shortening the coil spring 101 or by shortening the fluid chambers 95 and 96, it is impossible to change the design as such because the required performance may not be satisfied.

Accordingly, it is an object of the present invention to compact the overall size of the belt tensioner while satisfying the required performance.

### SUMMARY OF THE INVENTION

A first belt tensioner of the invention is arranged such that a turnable tension pulley is allowed to oscillate at a fulcrum of a position eccentric from the center of rotation thereof and tension control means for oscillating the tension pulley so as to keep tension of a belt constant and damper means for damping vibrations and shocks transmitted from the belt are provided individually on the side of the tension pulley.

A second belt tensioner of the invention comprises a turnable tension pulley for giving tension to a belt; an oscillation fulcrum shaft for supporting the tension pulley to a base such that it is allowed to oscillate at a fulcrum of a position eccentric from a center of rotation thereof; tension control means for oscillating the tension pulley so as to keep the tension of the belt constant; damper means for damping vibrations and shocks transmitted from the belt; and a single case which is fixed to the oscillation fulcrum shaft and in which the tension control means and the damper means are separately stored so as to adjoin on the same plane.

It is noted that in the first belt tensioner, the tension control means and the damper means may be disposed so as to adjoin on the same plane.

Meanwhile, in the second belt tensioner, the tension control means may be a spring provided between an inner bottom portion of the case and a convex portion projected from a side face of the tension pulley in a compressed state to elastically urge the tension pulley toward the belt. Further, locking members for blocking the tension pulley from oscillating due to the tension control means may be removably attached. Or, a locking member straddling across and engaging with the tension pulley and the case for blocking them from turning relatively may be removably attached.

In the first and second belt tensioners, the damper means may be disposed at a position close to the oscillation fulcrum of the tension pulley and the tension control means may be disposed at a position far from the oscillation fulcrum of the tension pulley as compared to the position of the damper means.

Because the tension control means and the damper means are separated in the first belt tensioner of the invention described above, they may be disposed so as to fit within the overall size of the tension pulley on the side of the tension pulley by disposing side by side so as to adjoin on the same plane.

Because the tension control means and the damper means are separately stored in the single case so as to adjoin on the same plane in the second belt tensioner of the invention, it allows the belt tensioner to be compacted further and assembly works to be simplified.

Further, because the controllable range of the overall size of the tension control means may be expanded as compared to the prior art examples, it allows various settings of tension to be dealt with widely corresponding to a requirement based on a layout of a belt and the like. Meanwhile, because the damper means is close to the oscillation fulcrum shaft of the tension pulley, the operating stroke of the damper may be shortened, contributing to the reduction of the size.

Still more, the tension given to the belt from the tension pulley may be enhanced even by small elastic urging force based on the principle of lever by disposing the tension control means at the position far from the oscillation fulcrum shaft of the tension pulley.

The works for installing the belt tensioner to the object of installation may be readily carried out by restricting the motion of the tension pulley by the locking members. Because the motion of the tension pulley becomes free when the locking members are removed after the installation, it controls the tension of the belt by receiving elastic urging force from the tension control means.

As described above, the present invention can provide the belt tensioner whose overall size is compacted while satisfying the required performance.

Other objects, constructions, operations, and effects of the invention will become apparent more fully from the description given below, but it should be understood that the description and examples given below are intended to illustrate the invention, and not to limit the scope of the invention, since many modifications and variations of the example disclosed herein are within the scope of the invention.

### BRIEF DESCRIPTION OF DRAWINGS

The accompanying drawings, which are incorporated in and form a part of this specification, illustrate embodiments of the invention and, together with the description, serve to explain the principles of the invention. In all these figures, like components are indicated by the same numerals.
FIGs. 1a and 1b are drawings diagrammatically showing use conditions of a belt tensioner according to one embodiment of the present invention;
FIG. 2 is a perspective view of the belt tensioner in FIG. 1 seen from the back thereof;
FIG. 3 is a partially sectional plan view of the belt tensioner in FIG. 1 seen from the back thereof;
FIG. 4 is a section view of the belt tensioner in FIG. 3 taken along a line (4) - (4);
FIG. 5 is a section view of the belt tensioner in FIG. 3 taken along a line (5) - (5);
FIG. 6 is a plan view of a belt tensioner according to another embodiment of the present invention seen from the back thereof;
FIG. 7 is a section view of the belt tensioner in FIG. 6 taken along a line (7) - (7);
FIG. 8 is a plan view of a belt tensioner according to another embodiment of the present invention seen from the front thereof;
FIG. 9 is a section view of the belt tensioner in FIG. 8 taken along a line (9) - (9);
FIG. 10 is a perspective view of a belt tensioner according to another embodiment of the present invention seen from the back thereof;
FIG. 11 is a plan view of-the belt tensioner in FIG. 10 seen from the front thereof;
FIG. 12 is a section view of the belt tensioner in FIG. 11 taken along a line (12) - (12);
FIG. 13 is a plan view of a belt tensioner of a prior art example seen from the back thereof; and

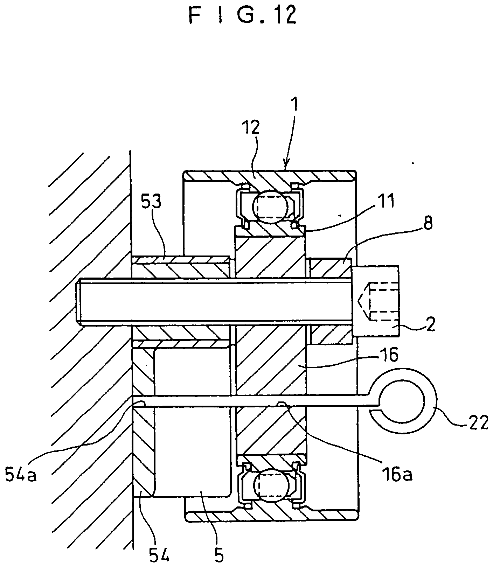

FIG. 12 is a section view of a direct-acting actuator of the belt tensioner in FIG. 13.

### DESCRIPTION OF PREFERRED EMBODIMENTS

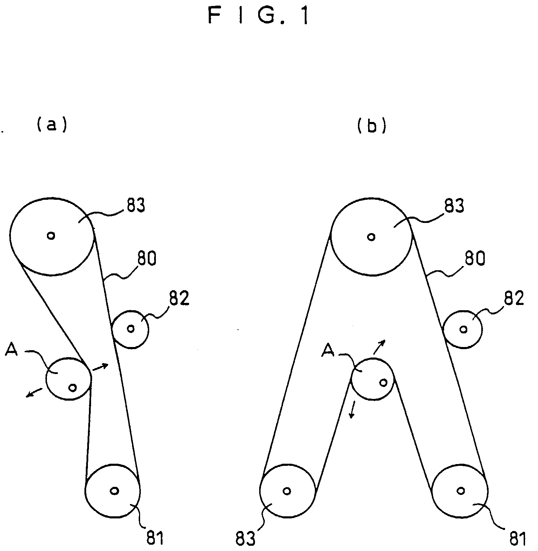

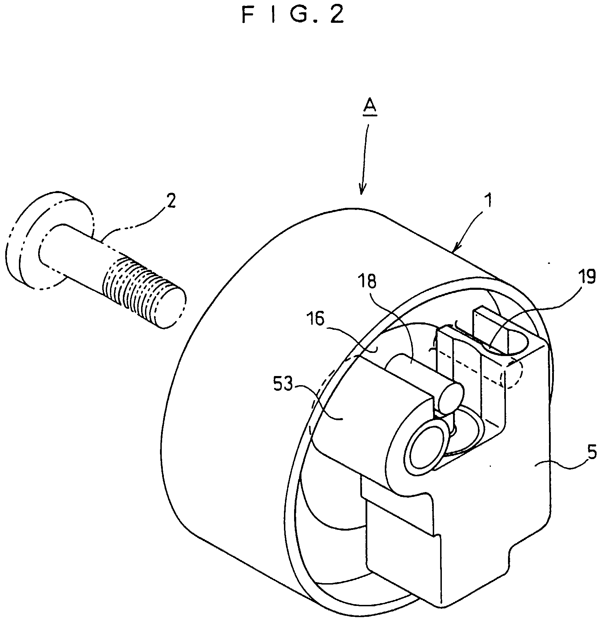

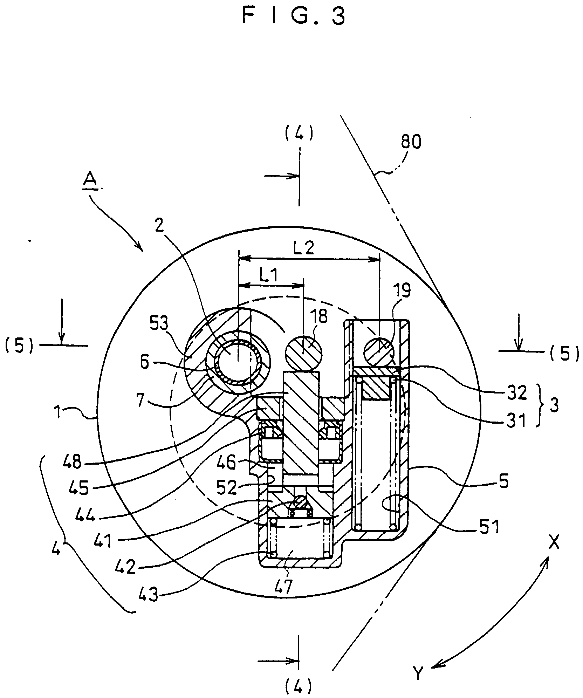

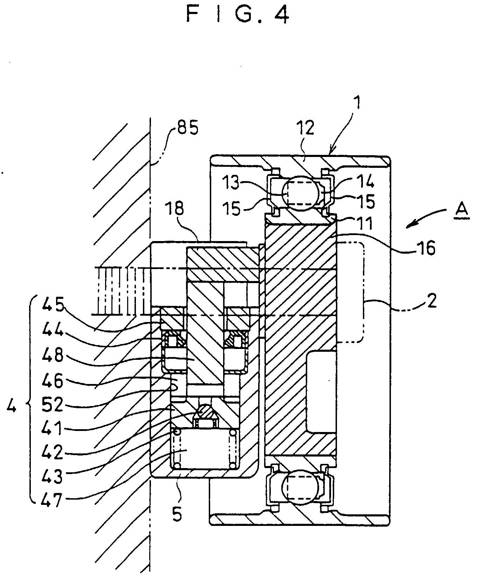

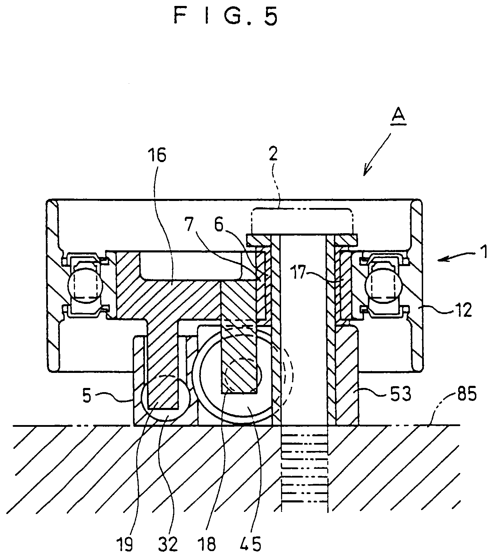

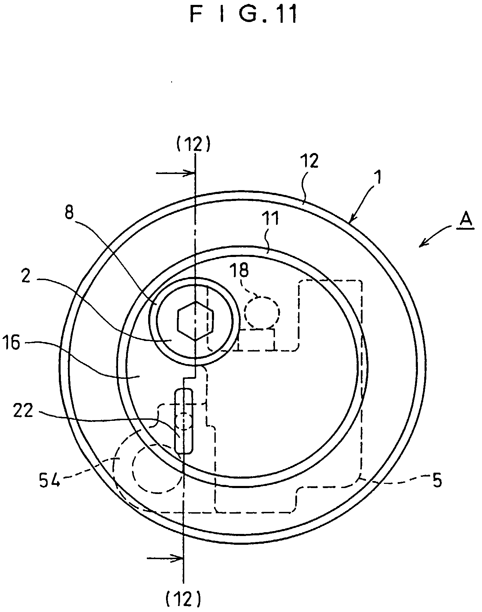

Preferred embodiments of the present invention will be explained in detail below based on embodiments shown in FIGs. 1 through 12. FIGs. 1 through 5 show one embodiment of the present invention, wherein FIGs. 1a and 1b are drawings diagrammatically showing use conditions of a belt tensioner according to one embodiment of the present invention; FIG. 2 is a perspective view of the belt tensioner in FIG. 1 seen from the back thereof; FIG. 3 is a partially sectional plan view of the belt tensioner in FIG. 1 seen from the back thereof; FIG. 4 is a section view of the belt tensioner in FIG. 3 taken along a line (4) - (4); and FIG. 5 is a section view of the belt tensioner in FIG. 3 taken along a line (5) - (5).

In FIG. 1, the reference numeral (80) denotes a belt, (81) a pulley of a crank shaft, (82) an idler pulley and (83) an auxiliary pulley, and the reference character (A) denotes a belt tensioner.

The belt tensioner A is installed to an object of installation 85 such as a block of an automobile engine to give required tension to the belt 80. It has functions of preventing the tension of the belt 80 from fluctuating due to changes of environmental temperature and fluctuation of torque to keep it constant and of damping vibrations and shocks transmitted from the belt 80.

As shown in FIGs. 2 through 4, this belt tensioner A comprises, mainly, a turnable tension pulley 1 for giving tension to the belt 80, an oscillation fulcrum shaft 2 for supporting the tension pulley 1 with respect to the object of installation 85, i.e. a base, such that it is allowed to oscillate at a fulcrum of a position eccentric from the center of rotation thereof, tension controlling means 3 for oscillating the tension pulley 1 so as to keep the tension of the belt 80 constant, damper means 4 for damping vibrations and shocks transmitted from the belt 80, and a single case 5 which is fixed to the oscillation fulcrum shaft 2 and in which the tension control means 3 and the damper means 4 are separately stored and disposed so as to adjoin on the same plane.

The tension pulley 1 is constructed in a body with a ball bearing and comprises an inner wheel 11, an outer wheel 12 which has a wider width and which functions also as the pulley around which the belt 80 is passed, a plurality of balls 13 interposed between the inner and outer wheels 11 and 12, a crowned holder 14 for holding the balls 13, seals 15 provided on the both sides in the axial direction between the inner and outer wheels 11 and 12 and a boss 16 which is press-fitted to the inner periphery of the inner wheel 11. The boss 16 is provided with a through hole 17 at a position eccentric from the center thereof, a pin 18 implanted at a position separated from the through hole 17 by a certain distance L1 and a pin-like convex portion 19 projecting at a position separated from that position by a certain distance L2.

The oscillation fulcrum shaft 2 is made of a bolt or the like to be screwed into the object of installation and inserted through the through hole 17 of the boss 16 via collars 6 and 7. The case 5 in which the tension control means 3 and the damper means 4 are stored is attached fixedly to the free end side of the oscillation fulcrum shaft 2.

The case 5 includes slotted holes 51 and 52 disposed side by side and a cylindrical mounting section 53 at the opening side of those long holes 51 and 52.

The tension control means 3 comprises a cylindrical coil spring 31 and a spring seat 32. The coil spring 31 is stored within one slotted hole 51 in the case 5 in a compressed state. It is arranged such that elastic restoring force of the coil spring 31 is applied to the pin-like convex portion 19 of the boss 16 positioned at the opening side of the slotted hole 51 to elastically urge the tension pulley 1 in one direction of rotation around the oscillation fulcrum shaft 2. The spring force of the coil spring 31 is set adequately depending on the layout of the belt 80 and the like as shown in FIGs. 1a and 1b.

The damper means 4 comprises a piston 41, connected with a push rod, which is stored within the other slotted hole 52 of the case 5 and which creates two fluid chambers 46 and 47, a check valve 42 which is provided in the piston 41 to control move of operating oil between the fluid chambers 46 and 47, a cylindrical coil spring 43 for elastically urging the piston 41 upward, a seal ring 44 for preventing the operating oil from leaking from the fluid chambers 46 and 47 and a close ring 45 for closing the opening of the other slotted hole 52 of the case 5. The push rod 48 of the piston 41 is arranged such that it abuts with the pin 18 of the boss 16 positioned at the opening side of the slotted hole 52 to damp vibrations and shocks transmitted from the belt 80 to the tension pulley 1.

Next, an operation of the belt tensioner A will be explained. When an environmental temperature rises and the object of installation 85 expands, the tension of the belt 80 inclines to increase. Then, thereby, the coil spring 31 of the tension control means 3 contracts and the check valve 42 of the damper means 4 closes. The oil moves gradually from the fluid chamber 47 to the fluid chamber 46 through a slight gap between the piston 41 and the case 5. The tension pulley 1 turns so as to retreat in the direction of an arrow Y in FIG. 3. Then, the excessive tension of the belt 80 is reduced and the tension pulley 1 stops at the position where the tension of the belt 80 balances with the spring force of the coil spring 31. Thus, the tension of the belt 80 is kept constant.

When the object of installation 85 contracts due to a drop of the environmental temperature on the other hand, the tension of the belt 80 inclines to decrease. Thereby, the coil spring 31 in the tension control means 3 expands and the check valve 42 of the damper means 4 is opened. The oil moves from the fluid chamber 46 to the fluid chamber 47. Then, the tension pulley 1 turns so as to advance in the direction of an arrow X in FIG. 3. The tension pulley 1 stops at a position where the tension of the belt 80 balances with the spring force of the coil spring 31 so as to keep the tension adequate. Thus, the tension of the belt 80 is kept constant.

Here, the case 5 is fixed and only the tension pulley 1 oscillates in any of the states described above. When vibrations and shocks are applied from the belt 80 to the tension pulley 1, the check valve 42 of the damper means 4 blocks the move of the operating oil in the fluid chambers 46 and 47, so that the instantaneous change of the tension of the belt 80 may be suppressed by damping the vibrations and shocks by the operating oil, thus preventing the belt 80 from slipping.

Because the tension control means 3 and the damper means 4 are separately stored in the case 5 so as to adjoin on the same plane in the embodiment described above, the length of each may be shortened. Then, they may be disposed on the side of the tension pulley 1 so as to fit within the overall size of the tension pulley 1 as shown in the figures and the compaction thereof can be achieved.

Further, because an controllable range of the length and diameter of the coil spring 31 composing the tension control means 3 for example may be expanded as compared to the prior art example by separating the tension control means 3 from the damper means 4, the tension may be set in a wider range corresponding to a requirement based on a layout of the belt 80 and the like. Still more, because the tension control means 3 is positioned far from the oscillation fulcrum shaft 2 of the tension pulley 1, the tension given from the tension pulley 1 to the belt 80 may be enhanced even by small elastic urging force based on the principle of lever. Meanwhile, because the damper means 4 is positioned close to the oscillation fulcrum shaft 2 of the tension pulley 1, the operating stroke of the piston 41 may be shortened, contributing to the reduction of the dimension. Still more, because a dislocation of position where the piston 41 abuts with the pin 18 may be reduced with respect to the oscillation of the tension pulley 1, the load of vibrations and shocks from the tension pulley 1 may be damped effectively.

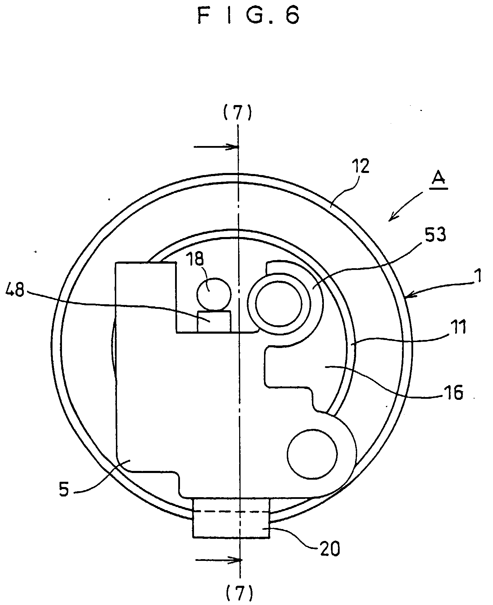

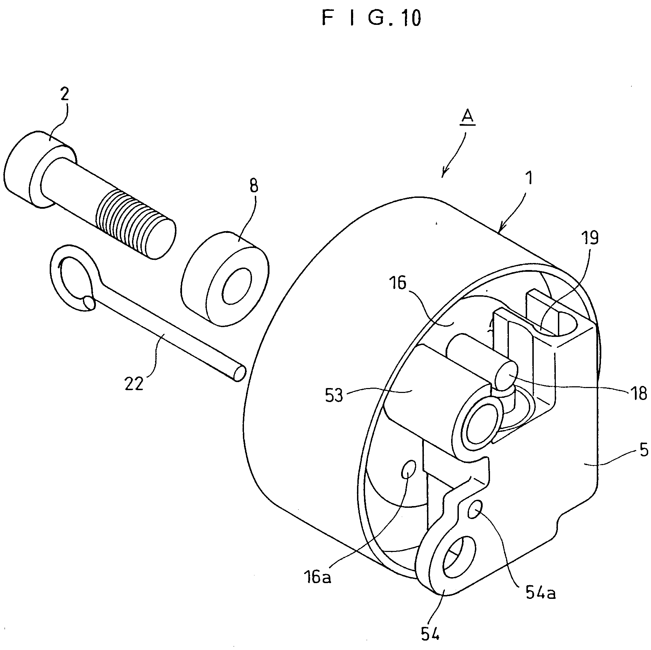

It is noted that the present invention is not confined only to the embodiment described above, and various applications and modifications thereof are conceivable as follows:
(1) Although the tension pulley 1 has been constructed in a body with the ball bearing in the embodiment described above, the tension pulley 1 may be constructed separately from the rolling bearing.
(2) Although the tension control means 3 and the damper means 4 have been stored in the single case 5 in the embodiment described above, they may be separated.
(3) Although the cylindrical coil spring has been used in the tension control means 3 in the embodiment described above, it may be replaced by an elastic urging member such as a disc spring.
(4) Locking members 20 through 22 for blocking the tension pulley 1 from turning relatively with the case 5 may be used in the belt tensioner A of the embodiment described above as shown in FIGs. 6 through 12 in order to readily install the belt tensioner to the object of installation thereof. In short, the locking members 20 through 22 are appropriately attached in a process for manufacturing the belt tensioner A and are removed after installing the belt tensioner A to the object of installation. If the locking members 20 through 22 are not used, the case 5 would be allowed to turn with respect to the tension pulley 1. Then, the tension pulley 1 would give the maximum tension due to the elastic urging force of the tension control means 3 and the damper means 4, disallowing the belt tensioner A to be installed to the object of installation.

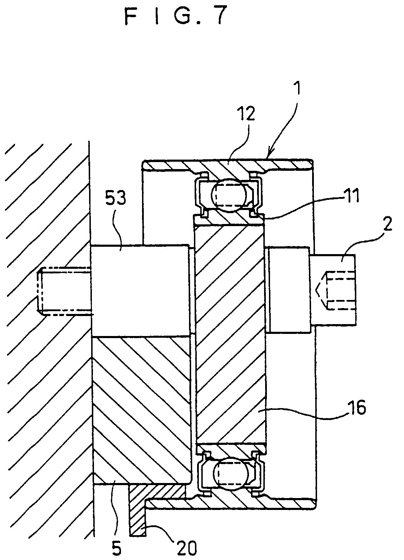

   (i) In FIGs. 6 and 7, the locking member 20 made from a plate bent in a shape of L is inserted to a gap between the bottom of the case 5 and the outer wheel 12 of the tension pulley 1. This locking member 20 is attached/removed at the back side of the belt tensioner A.

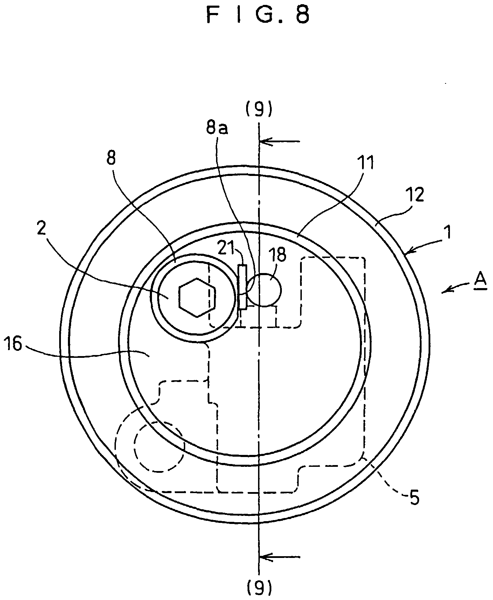

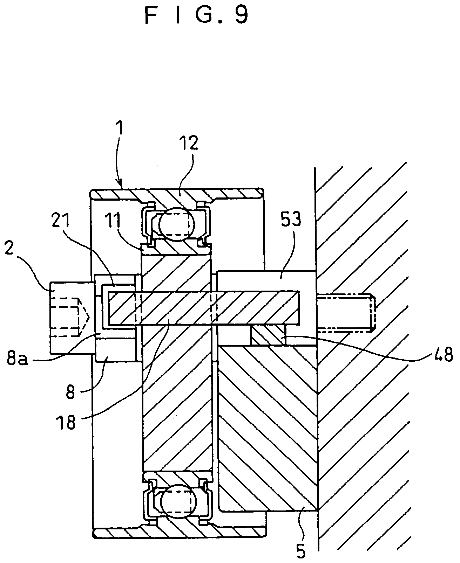

   (ii) In FIGs. 8 and 9, the pin 18 of the tension pulley 1 is protruded toward the front side of the belt tensioner A and a locking wheel 8 having a flat cutaway portion 8a at part of outer periphery thereof is attached at the head side of the oscillation fulcrum shaft 2 to insert the locking member 21 made from a rectangular plate between the projecting portion of the pin 18 and the cutaway portion 8a of the locking wheel 8. This locking member 21 is attached/removed at the front side of the belt tensioner A.
   (iii) In FIGs. 10 through 11, a flange 54 is provided at the side of the case 5 and through holes 54a and 16a are provided through the both flange 54 and the boss 16 of the tension pulley 1 to insert and span the locking member 22 made from a metallic pin from the through hole 16a of the boss 16 to the through hole 54a of the flange 54 in the axial direction. This locking member 22 is attached/removed from the front side of the belt tensioner A.

When the positions where the locking members 20 through 22 are attached are controlled so that the tension pulley 1 gives the minimum tension in (i) through (iii) above, the oscillation fulcrum shaft 2 for fixing the belt tensioner A to the object of installation may be attached most smoothly in the state in which the belt 80 is passed around. It is noted that the tension pulley 1 needs not be put into the state in which it gives the minimum tension in attaching the locking members 20 through 22 and may be adequately attached so long as it is within a range in which the belt 80 may be passed around. Then, because the motion of the tension pulley 1 becomes free when the locking members 20 through 22 are removed after installing the belt tensioner A, it controls the tension of the belt 80 by receiving the elastic urging force from the tension control means 3.

However, because the elastic urging force of the tension control means 3 acts on the outer wheel 12 via the locking member 20 only in the case of (i) described above, extra stress acts on the outer wheel 12 during the time from when the belt tensioner A is manufactured till it is installed to the object of installation. Therefore, it is preferable to select (ii) or (iii) considering that and the readiness of works for attaching/removing the locking members 20 through 22.

While there has been described what is at present considered to be preferred embodiments of the invention, it will be understood that various modifications may be made therein, and it is intended to cover in the appended claims all such modifications as fall within the true spirit and scope of the invention.

## Claims

1. A belt tensioner constructed such that a turnable tension pulley is allowed to oscillate at a fulcrum of a position eccentric from the center of rotation thereof;
said belt tensioner is characterized in that tension control means for oscillating said tension pulley so as to keep tension of a belt constant and damper means for damping vibrations and shocks transmitted from said belt are provided individually on the side of said tension pulley.

2. The belt tensioner according to Claim 1, wherein said tension control means and said damper means are disposed so as to adjoin on the same plane.

3. A belt tensioner, comprising:
a turnable tension pulley for giving tension to a belt;
an oscillation fulcrum shaft for supporting said tension pulley to a base such that it is allowed to oscillate at a fulcrum of a position eccentric from a center of rotation thereof;
tension control means for oscillating said tension pulley so as to keep the tension of said belt constant;
damper means for damping vibrations and shocks transmitted from said belt; and
a single case which is fixed to said oscillation fulcrum shaft and in which said tension control means and said damper means are separately stored so as to adjoin on the same plane.

4. The belt tensioner according to any one of Claims 1 through 3, wherein said damper means is disposed at a position close to the oscillation fulcrum of said tension pulley and said tension control means is disposed at a position far from the oscillation fulcrum of said tension pulley as compared to the position of said damper means.

5. The belt tensioner according to Claim 3 or 4, wherein said tension control means comprises a spring provided between an inner bottom portion of said case and a convex portion projected from a side face of said tension pulley in a compressed state to elastically urge said tension pulley toward said belt.

6. The belt tensioner according to any one of Claims 1 through 5, wherein locking members for blocking said tension pulley from oscillating due to said tension control means is removably attached.

7. The belt tensioner according to any one of Claim 3 or 5, wherein a locking member straddling across and engaging with said tension pulley and said case for blocking them from turning relatively is removably attached.
